# EUROPEAN PATENT SPECIFICATION

(11) **EP 0 799 411 B1**
(45) Date of publication and mention of the grant of the patent: **19.07.2000**
(21) Application number: 95940346.0
(22) Date of filing: 11.12.1995
(51) Int. Cl.: G01L 1/22, G01M 3/28, F16L 47/02, F17D 5/06

(54) **FUSED STRAIN GAUGE AND MONITORED PIPE SYSTEM**
EINGESCHMOLZENER DEHNUNGSMESSSTREIFEN UND ÜBERWACHTES LEITUNGSSYSTEM
JAUGE DE CONTRAINTE FONDUE ET SYSTEME DE CONDUITES SURVEILLE

(30) Priority: 20.12.1994 GB 9425770
(43) Date of publication of application: 08.10.1997
(73) Proprietor: UNIVERSITY OF BRADFORD, Bradford, West Yorkshire, BD7 1DP (GB)
(72) Inventor: DAY, Andrew, John, West Yorkshire BD7 1DP (GB)
(74) Representative: Sherrard-Smith, Hugh
(86) International application number: GB9502885
(87) International publication number: WO9619718

(56) References cited:
- EP-A- 0 185 650
- DE-C- 4 217 583
- GB-A- 2 137 026
- US-A- 4 712 182

## Description

The present invention relates to an article that incorporates a strain gauge, a method of holding a strain gauge fast to an article, a pipe system including a plurality of pipes attached together by connectors and a method of monitoring such a pipe system. The invention is particularly, although not exclusively, applicable to gas and water supply pipes.

In a known pipe supply system pipes are attached together in a line by connectors into which aligned ends of adjacent pipes extend. The pipes are sealed within these connectors. Failure of the pipeline is most likely to occur at the ends of the pipes in the region of the connectors. It frequently happens that the first sign that the pipeline has a fault is that gas or water no longer exits the pipeline at the same rate that it is supplied. Obviously, in the case of gas, this can be extremely dangerous. Furthermore, as the pipelines can have a considerable length, and as the pipeline may be relatively inaccessible, it can take a very considerable amount of time to check the pipeline in the region of each connection to find the failure.

Where it is desired to monitor the stress on an article a strain gauge is adhered to the article. The adhesive has to be rigid enough to transfer all movement or change in dimension to the gauge from the article and yet flexible enough not to fracture. Clearly there is a conflict in the design parameters of the adhesive that cannot be completely resolved and must necessarily involve a compromise. Furthermore the gauge is exposed and subject to damage through impact or the effects of a harsh environment.

GB 2 155 183A (Strain Measurement Devices Limited) shows strain gauges 4 that are mounted on a base 2 that is fixed to a surface S by stud welding. However, it is the surface S that is to be monitored by the strain gauge and the strain gauge is not directly in contact with the article to be monitored.

GB 1 456 403 (Welwyn Electric Limited) discloses an S shaped metal strip which is welded or mechanically secured to a mechanical structure that is to be stressed. However, the gauge is required to be fixed at separate spaced locations.

US 4 706 501 (Imperial Chemical Industries PLC) shows a pipe that is surrounded by four strain gauges 2, 3, 4 and 5. These gauges are bonded to the pipe 1 by adhesive.

According to one aspect of the present invention an article that incorporates a strain gauge which strain gauge, in use, is arranged to monitor the article is characterised in that a part of the article has been melted in order to hold the strain gauge fast with the article.

Part of the article may have been melted by passing current through and heating the strain gauge. Such a means of holding the strain gauge fast with the article provides an extremely accurate and simple way of attaching the strain gauge.

The heating may have been arranged to cause the article to bond with a further article.

The strain gauge may be integral with the article.

The strain gauge may be embedded in the article.

The electrical element of the strain gauge may comprise a wire.

The electrical element of the strain gauge may extend through more than 360° and may be helically wound. The electrical element may surround an opening.

The article may comprise a plastics article and may comprise a pipe connector.

Only the part of the article in the region of the strain gauge or that surrounds the strain gauge may have been melted.

According to another aspect of the present invention a method of holding a strain gauge fast to an article such that, in use, the strain gauge can monitor the article is characterised in that a part of the article is melted and then allowed to solidify in order to hold the strain gauge fast with the article.

The part of the article that is melted may be melted by passing current through and heating the strain gauge.

The method may comprise melting a part of the article and fusing the article with a further article.

The method may comprise melting the article only in the region of the strain gauge. The method may comprise melting the article around the strain gauge.

There may also be provided a pipe system including a plurality of pipes attached together by connectors each comprising the article as hereinbefore referred to, comprising monitoring a plurality of the connections between the pipes and the connectors by means of the strain gauges.

The strain gauge may be bonded to at least part of the connection between the pipes and the connectors.

There is also provided a method of monitoring a pipe system that includes a plurality of pipes attached together by connectors in which a plurality of the connections between the pipes and the connectors have each had a strain gauge held fast thereto by the method herein referred to the method comprising receiving information from each strain gauge and monitoring that information.

The method may comprise monitoring pipe system failure or fluid pressure within the pipe system, for instance.

The present invention includes any combination of the herein referred to features or limitations.

The present invention may be carried into practice in various ways and several embodiments will now be described by way of example and with reference to the accompanying drawings, in which:-
Figure 1 is a schematic exploded view of a connector 10 with associated pipes 11 and 12 being aligned either side,
Figure 2 is a plan sectional view taken along the line II-II of Figure 1;
Figure 3 is a side view of a pipeline 13 including a succession of connectors 10A, 10B, 10C and 10D that attach pipes 14, 15, 16, 17 and 18 together; and
Figure 4 is a cross-sectional view of a further embodiment of a connector showing pipes connected thereto.

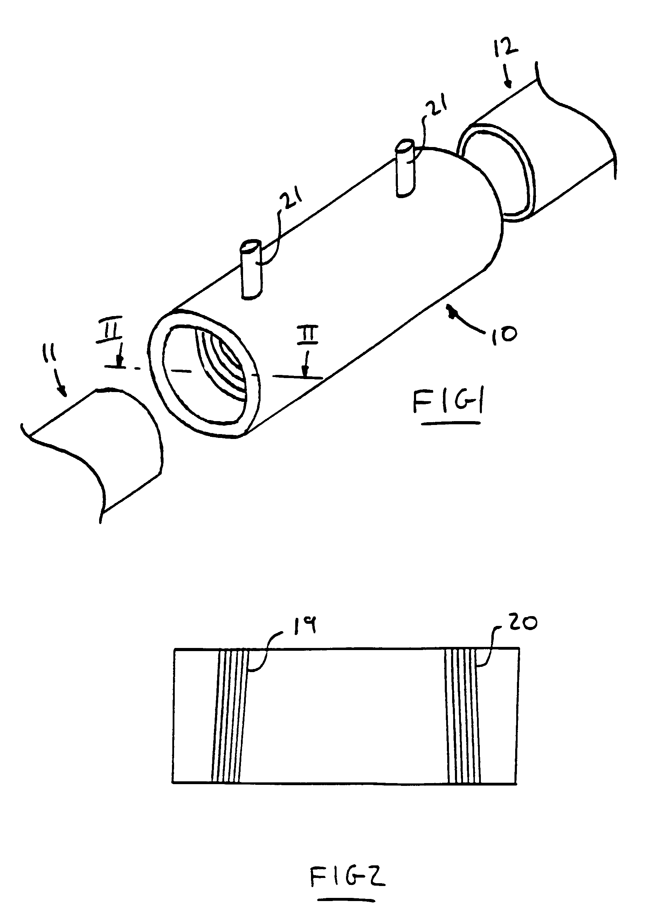

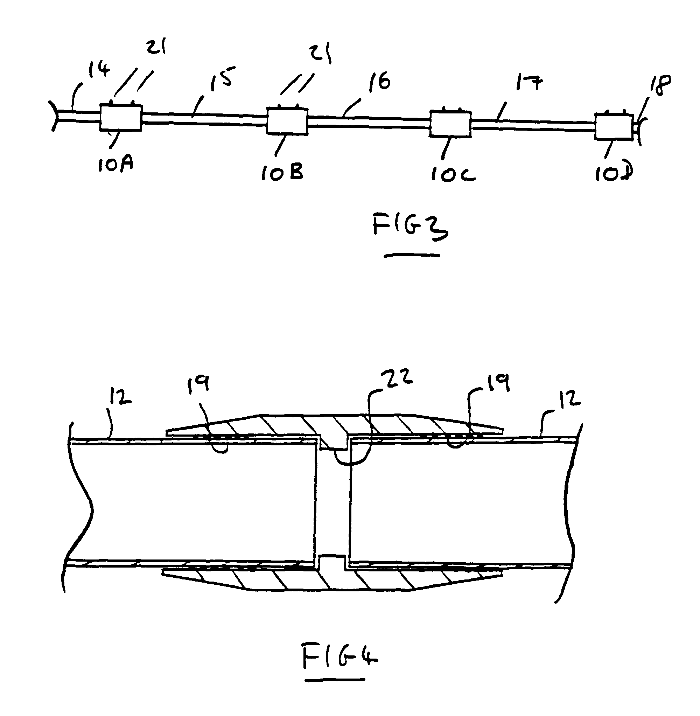

As shown in Figure 1 the connector 10 comprises a hollow tubular member into which the ends of the pipes 11 and 12 are arranged to be located. The pipes 11 and 12 are a close sliding fit with the internal cylindrical wall of the connector. Movement of the pipes into the connector is restricted by a projection (not shown in Figure 1 but shown as 22 in Figure 4) that extends into the bore of the connector at a central region thereof.

The internal surface of the connector includes a helically wound wire 19 and 20 towards each end of the connector. The wires are laid in grooves in the internal wall of the connector and the two ends of each wire lead to a terminal post 21.

When attaching the pipes to the connector, the pipes are first located in the connector. Then current is supplied through each wire via the connections at the terminal post 21. The current causes the wire to heat up and melt the immediately adjacent plastic of the connector and the adjacent outer surface region of the pipes and thereby cause the plastic from both parts to fuse together.

When the plastic components are connected together traditionally the wires have served no further purpose. The present invention, however, aims to use the wires as a strain gauge.

It will be appreciated that the wires themselves are bonded with or embedded in or fast with or integral with the very material that it is designed to monitor the stress of. Furthermore the wires are protected from the environment both externally to the pipeline and, when the wires are enclosed within plastics from the connector or plastics from both the pipe and connector. The terminal posts 21 that have previously been used to supply current through the wires are now used to provide a connection whereby a change in resistance occasioned by stress in the pipe can be monitored.

Figure 3 illustrates how the terminal posts of a pipeline are accessible in order that both wires at each of the joints 10A, 10B, 10C and 10D may be monitored.

The wires 19 and 20 at each connector may be able to monitor many strains and stresses including:-
1) radial pressure exerted both externally and internally (for example as a consequence of the fluid pressure within the pipe);
2) bending stresses occurring at the connectors, and
3) extension and compression forces exerted in line with the extent of the pipeline.

There may be a significant amount of background electrical noise picked up by the strain gauge which may render precise changes in strain difficult to monitor. Furthermore, the sensors may provide low signal-noise ratios. However, it may be sufficient to be able to monitor when this stress has been sufficient to break or damage the pipe or connection.

As shown in Figure 4, the connector in the region where the fusion occurs need not be as thick as the intermediate portion of the connector. This is because the overall width of the integral structure at the fusion zone is made up of the thickness of the connector and the thickness of the pipe wall. Indeed the wire 19 may be more sensitive in such a connection as they may pick up changes in stress more readily than in a structure of greater thickness or rigidity.

In an alternative embodiment (not shown) the sensor could be fixed to the pipe or connector separately from the electro-fusion of the pipes and connectors.

It will be appreciated that, although the illustrated embodiments have been described in relation to strain gauges for pipe connection for water or gas, for instance, the concept may have a wider application. For example, strain gauges could be an integral part of an article to be tested, or monitored, which article is not a pipe or a connector, rather than being adhered to the part to be tested. The wire of the gauge could be surrounded by the part to be tested by casting or moulding the part (which may be plastic) around the wire or by heating the wire to cause localised melting of the article around the wire.

The pipes and connectors may be plastics such as Polyethylene.

The present invention also includes monitoring a steel pipe, for instance when a localised repair is made, by fitting a short section of plastics pipe with a sensor.

The monitoring device could, for example, be a transponder which lies inactive and draws only residual power until activated by an external signal.

## Claims

1. An article (10) that incorporates a strain gauge (19,20) which strain gauge, in use, is arranged to monitor the article characterised in that a part of the article has been melted by passing current through and heating the strain gauge in order to hold the strain gauge fast with the article.

2. An article as claimed in Claim 1 in which the melting of a part of the article has also been arranged to cause the article to bond with a further article.

3. An article as claimed in any preceding claim in which the strain gauge is integral with the article.

4. An article as claimed in any preceding claim in which the strain gauge is embedded in the article.

5. An article as claimed in any preceding claim in which the electrical element of the strain gauge comprises a wire.

6. An article as claimed in Claim 5 in which the electrical element of the strain gauge extends through more than 360°.

7. An article as claimed in Claim 6 in which the electrical element is helically wound.

8. An article as claimed in any preceding claim comprising a plastics article.

9. An article as claimed in any preceding claim comprising a pipe connector.

10. An article as claimed in any preceding claim in which only the part of the article in the region of the strain gauge has been melted.

11. An article as claimed in any preceding claim in which the part of the article that surrounds the strain gauge has been melted.

12. A pipe system including a plurality of pipes attached together by connectors, the connectors each comprising the article as claimed in any of Claims 1 to 11, the system comprising monitoring a plurality of the connections between the pipes and the connectors by means of the strain gauges.

13. A pipe system as claimed in Claim 12 in which the strain gauge is bonded to at least part of the connection between the pipes and the connectors.

14. A pipe system as claimed in either of Claims 12 to 13 when a part of that system comprises the article incorporating a strain gauge as claimed in any of Claims 1 to 11.

15. A method of holding a strain gauge fast to an article such that, in use, the strain gauge can monitor the article characterised in that a part of the article is melted by passing current through and heating the strain gauge and in that the melted part is then allowed to solidify in order to hold the strain gauge fast with the article.

16. A method as claimed in Claim 15 comprising melting the part of the article and fusing the article with a further article.

17. A method as claimed in either of Claims 15 or 16 comprising melting the article only in the region of the strain gauge.

18. A method as claimed in any of Claims 15 to 17 comprising melting the article around the strain gauge.

19. A method of monitoring a pipe system that includes a plurality of pipes attached together by connectors in which a plurality of the connections between the pipes and the connectors each have had a strain gauge held fast thereto by a method as claimed in any of Claims 15 to 18 comprising receiving information from each strain gauge and monitoring that information.

20. A method as claimed in Claim 19 comprising monitoring the pipe system for failure of a part of the pipe system.

21. A method as claimed in Claim 19 or 20 comprising monitoring the fluid pressure within the pipe system.

## Patentansprüche

1. Gegenstand (10), in dem eine Dehnungsmeßeinrichtung (19, 20) eingebaut ist, wobei die Dehnungsmeßeinrichtung beim Gebrauch so eingerichtet ist, daß der Gegenstand überwacht wird,
**dadurch gekennzeichnet, daß**
ein Abschnitt des Gegenstands geschmolzen wurde, indem ein elektrischer Strom durch die Dehnungsmeßeinrichtung hindurchtritt und diese erwärmt, um die Dehnungsmeßeinrichtung fest an dem Gegenstand zu halten.

2. Gegenstand gemäß Anspruch 1, wobei das Schmelzen eines Abschnitts des Gegenstands auch vorgesehen ist, um ein Verbinden des Gegenstands mit einem weiteren Gegenstand zu bewirken.

3. Gegenstand gemäß einem der vorherigen Ansprüche, wobei die Dehnungsmeßeinrichtung mit dem Gegenstand einstückig ist.

4. Gegenstand gemäß einem der vorherigen Ansprüche, wobei die Dehnungsmeßeinrichtung in dem Gegenstand eingebettet ist.

5. Gegenstand gemäß einem der vorherigen Ansprüche, wobei ein elektrisches Element der Dehnungsmeßeinrichtung einen Draht aufweist.

6. Gegenstand gemäß Anspruch 5, wobei sich das elektrische Element der Dehnungsmeßeinrichtung über mehr als 360° erstreckt.

7. Gegenstand gemäß Anspruch 6, wobei das elektrische Element spiralartig gewunden ist.

8. Gegenstand gemäß einem der vorherigen Ansprüche, der einen Kunststoffgegenstand aufweist.

9. Gegenstand gemäß einem der vorherigen Ansprüche, der ein Rohrverbindungsglied aufweist.

10. Gegenstand gemäß einem der vorherigen Ansprüche, wobei nur der Abschnitt des Gegenstands, der im Bereich der Dehnungsmeßeinrichtung ist, geschmolzen wurde.

11. Gegenstand gemäß einem der vorherigen Ansprüche, wobei der Abschnitt des Gegenstands, der die Dehnungsmeßeinrichtung umgibt, geschmolzen wurde.

12. Rohrsystem mit einer Vielzahl von Rohren, die durch Verbindungsglieder miteinander verbunden sind, wobei die Verbindungsglieder jeweils den Gegenstand gemäß einem der Ansprüche 1 bis 11 aufweisen, und wobei das System ein Überwachen einer Vielzahl der Verbindungen zwischen den Rohren und den Verbindungsgliedern mittels der Dehnungsmeßeinrichtungen aufweist.

13. Rohrsystem gemäß Anspruch 12, wobei die Dehnungsmeßeinrichtung zumindest mit einem Teil der Verbindung zwischen den Rohren und den Verbindungsgliedern verbunden ist.

14. Rohrsystem gemäß einem der Ansprüche 12 bis 13, sofern ein Abschnitt des Systems den Gegenstand gemäß einem der Ansprüche 1 bis 11 aufweist, in dem eine Dehnungsmeßeinrichtung eingebaut ist.

15. Verfahren zum festen Halten einer Dehnungsmeßeinrichtung an einem Gegenstand derart, daß beim Gebrauch die Dehnungsmeßeinrichtung den Gegenstand überwachen kann,
**dadurch gekennzeichnet, daß**
ein Abschnitt des Gegenstands geschmolzen wird, indem ein elektrischer Strom durch die Dehnungsmeßeinrichtung tritt und diese erwärmt, und dem geschmolzenen Abschnitt dann ermöglicht wird, sich zu verfestigen, um die Dehnungsmeßeinrichtung fest an dem Gegenstand zu halten.

16. Verfahren gemäß Anspruch 15, das ein Schmelzen des Abschnitts des Gegenstands und ein Verschmelzen des Gegenstands mit einem weiteren Gegenstand aufweist.

17. Verfahren gemäß einem der Ansprüche 15 oder 16, das ein Schmelzen des Gegenstands nur im Bereich der Dehnungsmeßeinrichtung aufweist.

18. Verfahren gemäß einem der Ansprüche 15 bis 17, das ein Schmelzen des Gegenstands um die Dehnungsmeßeinrichtung herum aufweist.

19. Verfahren zum Überwachen eines Rohrsystems, das eine Vielzahl von Rohren enthält, die aneinander durch Verbindungsglieder angebracht sind, wobei eine Vielzahl an Verbindungen zwischen den Rohren und den Verbindungsgliedern jeweils eine Dehnungsmeßeinrichtung hat, die daran durch ein Verfahren gemäß einem der Ansprüche 15 bis 18 fest gehalten wird, und das ein Empfangen von Informationen von jeder Dehnungsmeßeinrichtung und ein Überwachen dieser Informationen aufweist.

20. Verfahren gemäß Anspruch 19, das ein Überwachen des Rohrsystems in bezug auf ein Fehlverhalten eines Abschnitts des Rohrsystems aufweist.

21. Verfahren gemäß den Ansprüchen 19 oder 20, das ein Überwachen des Fluiddrucks innerhalb des Rohrsystems aufweist.

## Revendications

1. Article (10) qui incorpore une jauge de contrainte (19, 20), cette jauge de contrainte, lors de l'utilisation, étant configurée pour contrôler l'article, caractérisé en ce qu'une partie de l'article a été fondue en faisant passer un courant à travers la jauge de contrainte et en chauffant celle-ci afin de maintenir la jauge de contrainte fixée à l'article.

2. Article selon la revendication 1, dans lequel la fusion d'une partie de l'article a également été provoquée de façon à faire adhérer l'article à un autre article.

3. Article selon l'une quelconque des revendications précédentes, dans lequel la jauge de contrainte est intégrée à l'article.

4. Article selon l'une quelconque des revendications précédentes, dans lequel la jauge de contrainte est noyée dans l'article.

5. Article selon l'une quelconque des revendications précédentes, dans lequel l'élément électrique de la jauge de contrainte comprend un fil.

6. Article selon la revendication 5, dans lequel l'élément électrique de la jauge de contrainte s'étend sur plus de 360°.

7. Article selon la revendication 6, dans lequel l'élément électrique est enroulé hélicoïdalement.

8. Article selon l'une quelconque des revendications précédentes, comprenant un article en matière plastique.

9. Article selon l'une quelconque des revendications précédentes, comprenant un connecteur de tuyaux.

10. Article selon l'une quelconque des revendications précédentes, dans lequel seule la partie de l'article dans la région de la jauge de contrainte a été fondue.

11. Article selon l'une quelconque des revendications précédentes, dans lequel la partie de l'article qui entoure la jauge de contrainte a été fondue.

12. Système de tuyaux comprenant une pluralité de tuyaux fixés les uns aux autres par des connecteurs, les connecteurs comprenant chacun l'article selon l'une quelconque des revendications 1 à 11, le système comprenant le contrôle d'une pluralité des connexions entre les tuyaux et les connecteurs aux moyens des jauges de contrainte.

13. Système de tuyaux selon la revendication 12, dans lequel la jauge de contrainte adhère au moins à une partie de la connexion entre les tuyaux et les connecteurs.

14. Système de tuyaux selon l'une ou l'autre des revendications 12 à 13, dans lequel une partie de ce système comprend l'article incorporant une jauge de contrainte selon l'une quelconque des revendications 1 à 11.

15. Procédé de maintien d'une jauge de contrainte fixée à un article de telle sorte que, lors de l'utilisation, la jauge de contrainte puisse contrôler l'article, caractérisé en ce qu'une partie de l'article est fondue en faisant passer un courant à travers la jauge de contrainte et en chauffant celle-ci, et en ce que l'on laisse ensuite la partie fondue se solidifier pour maintenir la jauge de contrainte fixée à l'article.

16. Procédé selon la revendication 15, comprenant la fusion de la partie de l'article et la fusion de l'article à un autre article.

17. Procédé selon l'une ou l'autre des revendications 15 ou 16, comprenant la fusion de l'article uniquement dans la région de la jauge de contrainte.

18. Procédé selon l'une quelconque des revendications 15 à 17, comprenant la fusion de l'article autour de la jauge de contrainte.

19. Procédé de contrôle d'un système de tuyaux qui comprend une pluralité de tuyaux fixés les uns aux autres par des connecteurs, dans lequel une pluralité des connexions entre les tuyaux et les connecteurs comportent chacune une jauge de contrainte maintenue fixée à celles-ci par un procédé selon l'une quelconque des revendications 15 à 18, comprenant la réception d'une information depuis chaque jauge de contrainte et le contrôle de cette information.

20. Procédé selon la revendication 19, comprenant le contrôle du système de tuyaux en ce qui concerne une défaillance d'une partie du système de tuyaux.

21. Procédé selon la revendication 19 ou 20, comprenant le contrôle de la pression de fluide à l'intérieur du système de tuyaux.
